# EUROPEAN PATENT SPECIFICATION

(11) **EP 4 112 346 B1**
(45) Date of publication and mention of the grant of the patent: **06.11.2024**
(21) Application number: 22182486.5
(22) Date of filing: 01.07.2022
(51) Int. Cl.: B60J 5/04, B60J 5/10

(54) **LIFTGATE WITH METAL REINFORCEMENT AND A SWINGDOOR ARRANGMENT**
HECKKLAPPE MIT METALLVERSTÄRKUNG UND FLÜGELTÜRANORDNUNG
HAYON AVEC RENFORT MÉTALLIQUE ET AGENCEMENT DE PORTE BATTANTE

(30) Priority: 02.07.2021 US 202163217782 P; 24.08.2021 US 202163236434 P; 26.08.2021 US 202163237393 P
(43) Date of publication of application: 04.01.2023
(73) Proprietor: Magna Exteriors Inc., Aurora ON L4G 7K1 (CA)
(72) Inventor: Hasl, Paul, 460 14 LIBEREC (CZ); Kadlec, Vitezslav, 460 15 LIBEREC (CZ); Sivek, Martin, 460 14 LIBEREC (CZ); Bárta, Jan, 46006 LIBEREC (CZ)
(74) Representative: Glawe, Delfs, Moll

(56) References cited:
- EP-A1- 0 835 775
- EP-A2- 1 728 664
- WO-A1-02/08004
- DE-U1- 202004 011 851
- US-A- 6 053 562

## Description

### FIELD OF THE INVENTION

The present invention relates to liftgate systems for automobiles. More specifically, to a composite liftgate and method of manufacture. The present invention also relates to a metal reinforcement for swingdoor tailgates, hybrid design, mixture of tubes and stamped sheet.

### BACKGROUND OF THE INVENTION

One of the current trends in the automobile industry is to lower vehicle weight to help achieve better fuel economy, thus helping to meet fuel economy standards and to offset the higher fuel prices. Another trend is that there is a broader range of vehicle models, which in turn reduces the volume of vehicles produced on a per model basis. Liftgates are traditionally made from stamped steel panels that are heavy and have a high tooling cost and are susceptible to corrosion. Sheet Molding Compound (SMC) is an alternative to steel for the inner and outer panels of the liftgate. Using SMC has several manufacturing concerns related to the material and process. Steel and SMC liftgates have a mass penalty over thermoplastics. There are also styling restrictions with traditional sheet metal and SMC components.

In another aspect of the invention, it is desirable to provide steel wire reinforcements between and connected with the inner and outer panels in order to further strengthen the liftgate. Traditionally steel wires or cables have been used to hold the liftgate together during a collision. However, the traditional steel cables do not provide any type of strengthening features. It is therefore desirable to develop and provide new strengthening features either formed within the inner and outer panels are connected between the inner and outer panels that can be used to strengthen the overall liftgate structure as well as strengthen and support connection accessories such as light modules, door latches etc.

In yet another aspect of the invention, Rear doors of SUVs, vans and other vehicles are complex to engineer. They tend to be large areas which require hinge attachment points for opening and closing of the doors. The doors must seal to keep the elements out and require stiffness and strength for operating and sealing of the doors but also requiring as light of weight as possible since they have to be supported by hinges. Therefore, robust hinge attachment points capable of holding the weight of doors, dampening struts, latches, and handles are required.

EP 0 835 775 A1 discloses a vehicle door arranged at the rear, with a lower part and an upper part adjoining the lower part and having a window pane, the upper part being arranged on the lower part so as to be pivotable about a first horizontal axis. The tailgate is arranged so as to be pivotable laterally outwards, and that its upper part, when the tailgate is open, can be placed against the inner side of the lower part or is arranged so as to be foldable into a corresponding recess of the inner side of the lower part.

WO 02/08004 A1 discloses a sliding door 2 for vehicles with a space frame formed from an extruded aluminum tube to which inner 40 and outer 80 aluminum door panels are attached.

US 6,053,562 discloses a door for a vehicle with a structural tubular frame member having side members which terminate in laterally extending foot portions with terminal ends.

EP 1 728 664 A2 discloses a liftgate for a vehicle comprising an upper gate which at the top is pivotally connectable with the vehicle, and a lower gate which at the bottom is pivotally and releasably connectable with the vehicle.

DE 20 2004 011 851 U1 discloses a vehicle rear door, in particular tailgate or revolving rear door, having a frame designed as a metal profile, having at least one outer trim part and at least one pane. The frame is bonded onto an inner part, and the inner part (and/or the pane) forms the entire bearing surface for sealingly bearing on a body seal.

### SUMMARY OF THE INVENTION

The invention proposes a vehicle door comprising the features of claim 1. In a preferred embodiment the door is a swingdoor which opens from the center to the outside.

The door construction of the present invention provides a vehicle door with very good mechanical performance with respect to torsional and bending stiffness. It provides good crash performance and metal reinforcement at latch, strut, ball joint, and hinge points. The door uses tubes and stamped sheet metal parts and is easier and cheaper to manufacture. Additionally, the complete assembly can be easily adjusted for needed dimensions/tolerance requirements in welding process.

Another embodiment of the invention relates to a composite liftgate structure having an inner panel formed of composite material and an outside surface with a perimeter surface area that is adjacent a perimeter edge of the structural composite inner panel. There is a metal hybrid reinforcement connected to the perimeter surface area, wherein the metal hybrid reinforcement forms a closed ring around a perimeter of the inner panel thereby providing enhanced strength to the composite liftgate structure. There is also at least one outer panel connected to the inner panel, wherein the metal hybrid reinforcement is positioned between the inner panel and the at least one outer panel.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is an exploded side perspective view of a composite liftgate according to a non-claimed embodiment.
Fig. 2A is a side elevational view of the metal hybrid reinforcement.
Fig. 2B is a first cross-sectional plan view of the metal hybrid reinforcement of Fig. 2A.
Fig. 2C is a second cross-sectional plan view of the metal hybrid reinforcement of Fig. 2A.
Fig. 2D is a third cross-sectional plan view of the metal hybrid reinforcement of Fig. 2A.
Fig. 2E is a fourth cross-sectional plan view of the metal hybrid reinforcement of Fig. 2A.
Fig. 3 is an exploded side perspective view of the metal hybrid reinforcement of the composite liftgate.
Fig. 4 is an exploded perspective view of a swing door according to another non-claimed embodiment.
Fig. 5 is an exploded view of a swing door according to the present invention.
Fig. 6 is an end perspective view of the tubular frames of the swing door of Fig. 5.
Fig. 7 is an end perspective view of the tubular frames connected to the inner panels in Figs. 5 and 6.

### DETAILED DESCRIPTION OF THE PREFERRED EMBODIMENTS

The following description of the preferred embodiment is merely exemplary in nature and is in no way intended to limit the invention, its application, or uses.

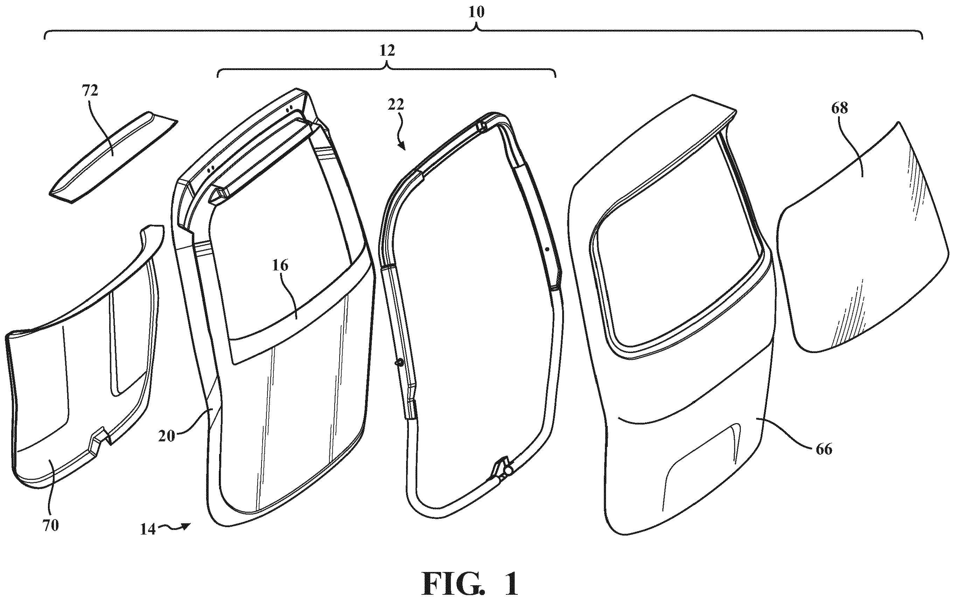

Referring now to Fig. 1 an exploded side perspective view of a non-claimed composite liftgate 10 having a composite liftgate structure 12. The composite liftgate structure 12 is a portion of the composite liftgate 10 that adds structure and strength to the composite liftgate 10. The composite liftgate structure 12 includes an inner panel 14 formed of composite material having an outside surface 16 with a perimeter surface area 18 that is adjacent a perimeter edge 20 of the inner panel 14.

The composite liftgate structure 12 further includes a metal hybrid reinforcement 22 that is connected to the inner panel 14 using adhesives, welding, or a plurality of mechanical fasteners. The metal hybrid reinforcement 22 is formed of steel, aluminum, or combinations thereof. It is also within the scope of this disclosure for the metal hybrid reinforcement 22 to be formed of other metals or a combination of metals and composite materials depending on the needs of a particular application. The metal hybrid reinforcement 22 is connected to the perimeter surface area 18. The perimeter surface area 18 is an area on the outside surface 16 that is adjacent the perimeter edge 20 and has a large enough area suitable for connecting to the outside surface 16 of the inner panel 14.

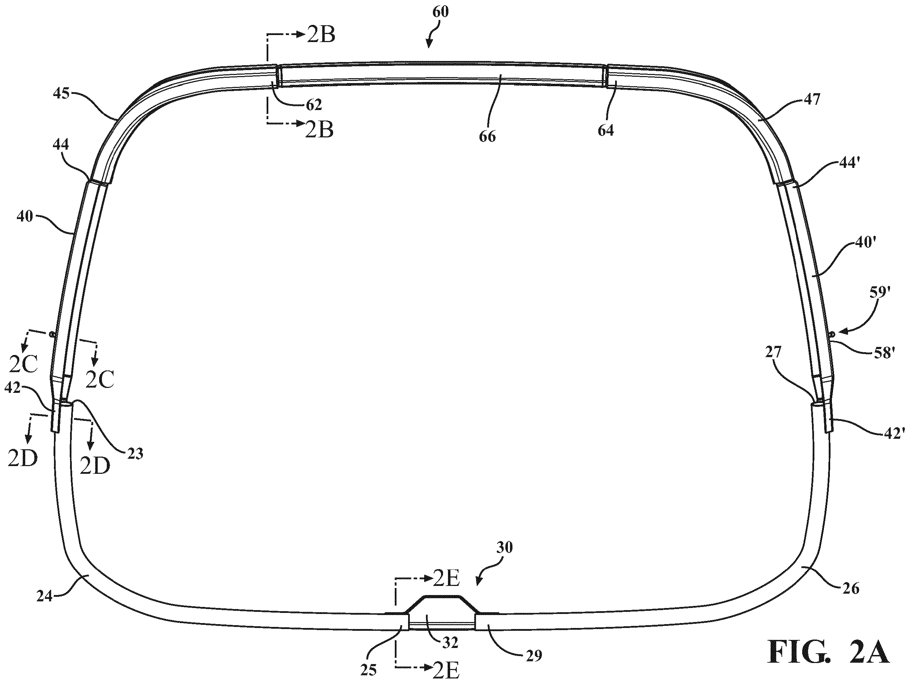

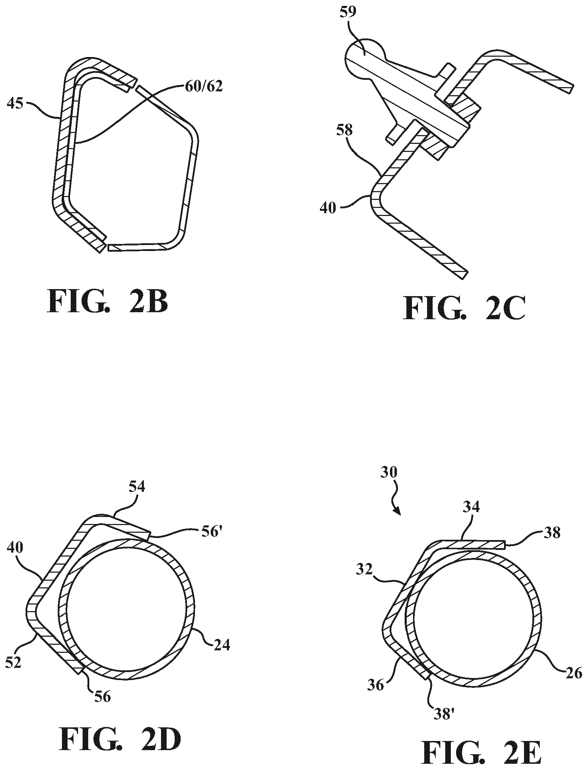

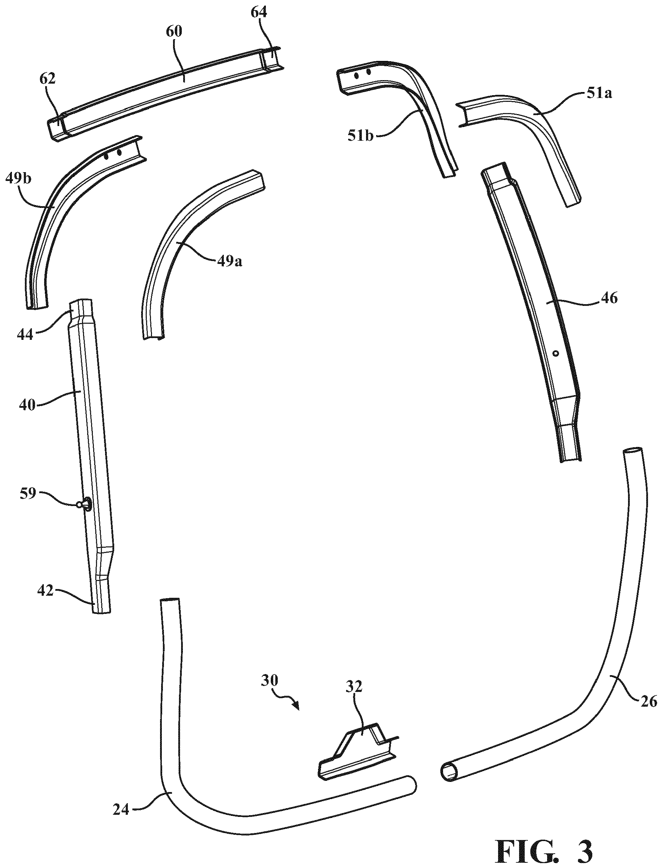

The term "hybrid" when referring to the metal hybrid reinforcement 22 refers to the variety of different cross-sectional shaped pieces on the metal hybrid reinforcement 22 that allows different components to be attached, which will now be described. Referring also to Figs. 2A-E and 3 the metal hybrid reinforcement 22 includes a first tube section 24 with a first end 23 and a second end 25, and a second tube section 26 with a first end 27 and second end 29. The first tube section 24 and second tube section 26 as shown have a circular cross-section with a hollow bore in the middle, however, it is within the scope of this disclosure for the cross section to have a different shape. A latch reinforcement 30 is connected between the first tube section 24 and second tube section 26 at the respective second end 25, 29. The connection between the latch reinforcement 30 and the first tube section 24 and second tube section 26 is a welded connection, however, it is within the scope of this disclosure for another suitable connection to be used such as, but not limited to adhesives and mechanical connections. The latch reinforcement 30 has a latch mounting surface 32 with legs 34, 36 extending therefrom that wrap around and rest against a portion of the outer circumference of the first tube section 24 and second tube section 26. The legs 34,36 are connected to the outer circumference of the first tube section 24 and second tube section 26 using a connection 38, 38' which can be a weld, adhesives, solder or other suitable connection. The latch mounting surface 32 is then used to connect components of a latch (not shown) to the metal hybrid reinforcement 22. The area of the latch mounting surface 32 as shown can vary in size and have a surface area that is wider than the width of the first tube section 24 and second tube section 26.

The metal hybrid reinforcement 22 further includes a first ball stud section 40 with a first end 42 and a second end 44 and a second ball stud section 40' with a first end 42' and second end 44'. The first end 42 of the first ball stud section 40 is connected to the first end 23 of the first tube section 24. The first end 42' of the second ball stud section 40' is connected to the first end 27 of the second tube section 26. Both the first ball stud section 40 and the second ball stud section 40' have a U-shaped cross-section with a first leg 52 and second leg 54 that connects to the outer circumference of the respective first tube section 24 or the second tube section 26 using a connection 56, 56' that is a weld, adhesives, solder, or other suitable connection. The first ball stud section 40 and the second ball stud section 40' include a ball joint mounting surface 58, 58' that is used to connect a ball 59, 59' that is part of a ball joint connected between the composite liftgate 10 and the vehicle.

Connected to the second end 44 of the first ball stud section 40 is a left corner section 45 and connected to the second 44' of the first ball stud section 40' is a right corner section 47. Extending between the left corner section 45 and right corner section 47 is a hinge attachment section 60. The hinge attachment section 60 has a first end 62 and a second end 64. The first end 62 of the hinge attachment section 60 is connected to the left corner section 45 so that the left corner section 45 wraps around and is connected by welding or bonding to the hinge attachment section 60. The second end 64 of the hinge attachment section 60 is connected to the right corner section 47 so that the right corner section 47 wraps around and is connected by welding or bonding to the hinge attachment section 60. The hinge attachment section 60 has an attachment surface area 66 that is used to connect one or more hinges that pivotally connect the composite liftgate 10 to a vehicle. The left corner section 45 and right corner section 47 in a preferred embodiment are two pieces formed of a front left corner piece 49a, back left corner piece 49b, front right corner piece 51a, and back right corner piece 51b that are connected together about the respective ends of the hinge attachment section 60, first ball stud section 40 and second ball stud section 46.

The composite liftgate 10 is completed by connection of an outer panel 66 connected to the inner panel 14. The metal hybrid reinforcement 22 is positioned between the inner panel 14 and the outer panel 66. The outer panel 66 forms the exterior show surface of the composite liftgate 10 and can be a single piece or it can be multiple pieces depending on the needs of a particular application. Additionally, there is a window 68 that is formed of plastic or glass that is connected to either the inner panel, 114 or the outer panel 66. The window 68 is an optional feature since some vehicles do not have a rear window. Additionally, the composite liftgate 10 optionally further includes inner trim piece 70, 72 that are shown as two pieces, however, a greater or lesser number of inner trim pieces can be used. The inner trin pieces 70, 72 form the inside surface of the composite liftgate 10 that is visible from inside the passenger compartment of the vehicle. The metal hybrid reinforcement 22 once fully assembled has a circular shape that adds strength to the composite liftgate 10, while also permitting several other structures such as hinges. ball joints and latch mechanisms to be attached.

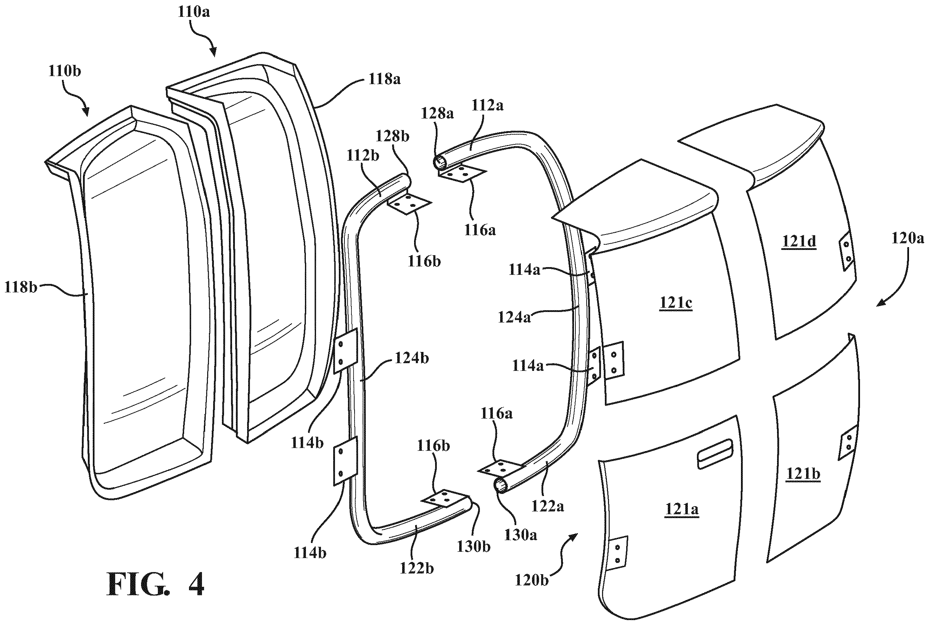

Referring now to Figs. 4-6 are two embodiments of a vehicle door wherein like numbers differing by 100 are like components in the embodiments, with Fig. 4 showing a non-claimed embodiment. The vehicle door 110a, 110b, 210a, 210b that is a swing door having a first vehicle door 110a, 210a and second vehicle door 110b, 210b that are left and right side doors that meet together when in the closed position. The vehicle door 110a, 110b, 210a, 210b includes a left side door (see vehicle door 110b, 210b) and right side door (see vehicle door 110a, 210a), which can be arranged in a different orientation such as top and bottom or one side can be larger than the other. The vehicle door 110b, 110b, 210a, 210b each include a frame member 112a, 112b, 212a, 212b respectively, which is an internal tubular frame for providing attachment of hinges 114a, 114b, 214a, 214b and attachment surfaces 116a, 116b, 216a, 216b, 216c, 216d for connecting latches to the frame 112a, 112b, 212a, 212b.

Each vehicle door 110a, 110b, 210a, 210b further includes at least one inner panel 118a, 118b, 218a, 218b and outer panel 120a, 120b, 220a, 220b for attaching respectively to the frame 112a, 112b, 212a, 212b. Frame members 112a, 212a, inner panel 118a, 218a and outer panel 120a, 220a are respective mirror images of frame members 112b, 212b, inner panel 118b, 218b and outer panel 120b, 220b. The outer panel 120a, 120b in Fig.4 includes multiple outer panels 121a, 121b, 121c, 121d, while the outer panel 220a 220b includes multiple outer panels 221a, 221b, 221c, 221d; however, it is within the scope of the invention for the multiple outer panels in both embodiments a lesser or greater number of panels depending on the needs of particular application. Multiple inner panels are also within the scope of the invention. In one embodiment the inner panels 18, 18a, 118 and 118a are connected to the respective frame 12a, 12b, 112a, 112b by adhesives, fastener or the like and the outer panels 20a, 20b, 20c, 20d, 120a, 120b, 120c, 120d are connected to the inner panels.

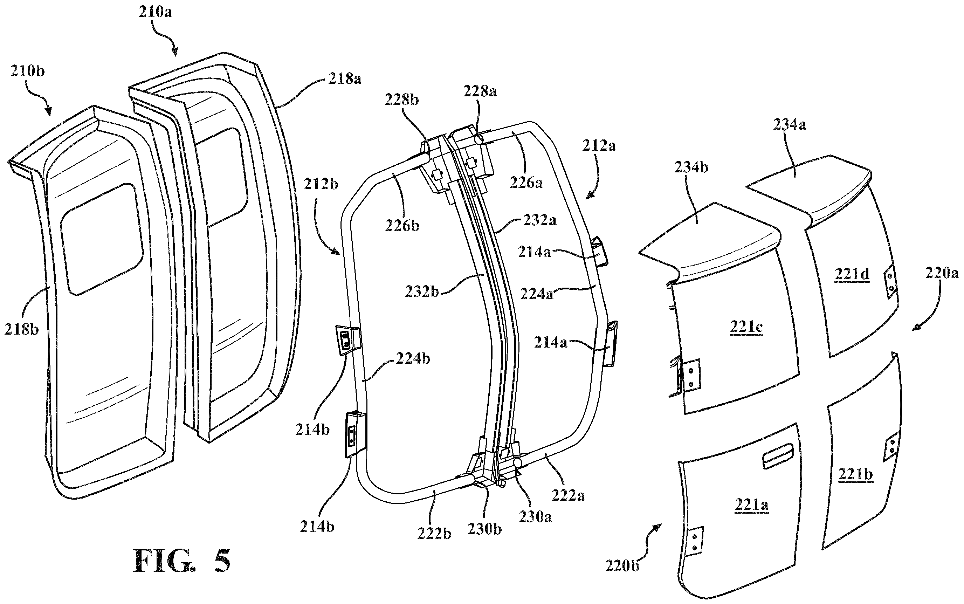

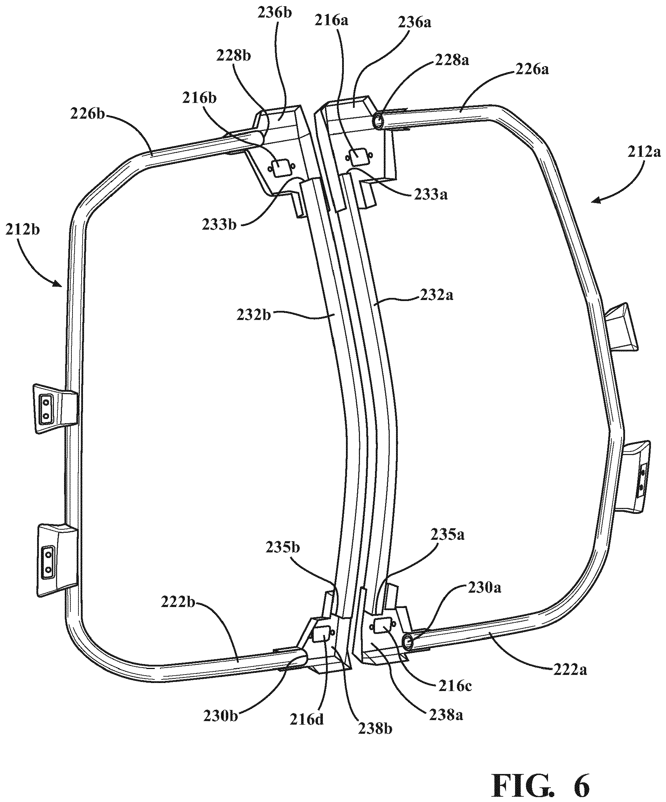

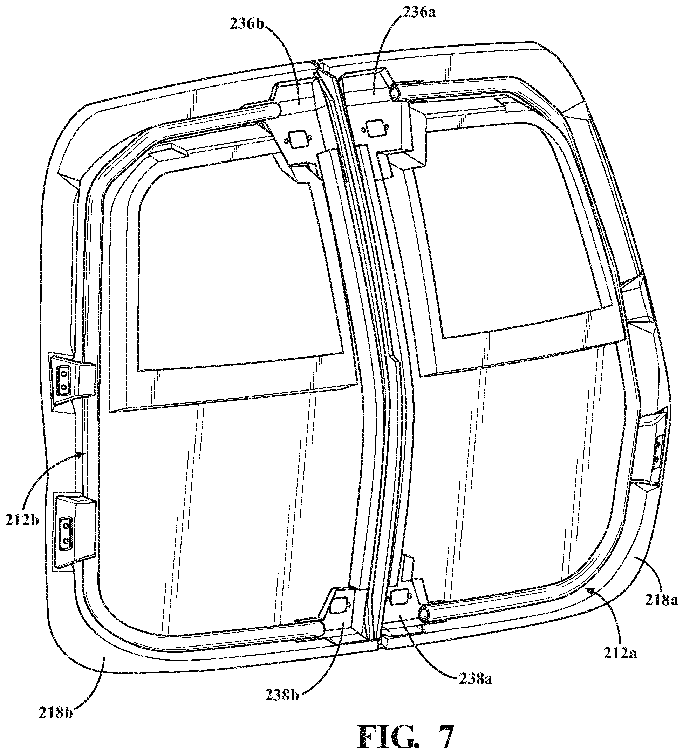

Each of the frame members 112a, 112b, 212a, 212b the frame includes a first leg 122a, 122b, 222a, 222b, a middle connection leg 124a, 124b, 224a, 224b and a second leg 126a, 126b, 226a, 226b for forming a "C" shaped or "U" shaped frame member. The first leg 122a, 122b, 222a, 222b and second leg 126a, 126b, 226a, 226b have terminal outer ends 128a, 128b, 130a, 130b, 228a, 228b, 230a, 230b. Typically, these are extruded or other tubular members and are made out of aluminum or steel which allows welding attachment of hardpoints for hinges and latches. The tubes are typically bent but could be pieces welded together to from a "C" or "U" shape. With respect to the embodiment in Figs. 5-7 there is provided an additional reinforcement member 232a, 232b, referred to as a first reinforcement member and a second reinforcement member. Each reinforcement member 232a, 232b has an upper end 233a, 233b and a lower end 235a, 235b that are connected respectively to the terminal ends 228a, 228b, 230a, 230b to provide additional strength and rigidity if needed. Referring also to Figs. 6 and 7 the upper end 233a, 233b of the reinforcement 232a, 232b and terminal end 228a, 228b of second leg 226a, 226b are each connected to a respective an upper bracket 236a, 236b that also includes one of the attachment surfaces 216a, 216b. The lower end 235a, 235b of the reinforcement 232a, 232b and terminal end 230a, 230b of first leg 222a, 222b are each connected to a respective a lower bracket 238a, 238b that also includes one of the attachment surfaces 216c, 216d. The upper bracket 236a, 236b and lower bracket 238a, 238b provide the attachment surfaces 216a-d for attaching latches, locks and other features. The upper bracket 236a, 236b and lower bracket 238a, 238b also help reduce assembly complexity because they the reinforcements 232a, 232b and the tubular frame 212a, 212b will be connected with less bends.

When the reinforcements 238a, 238b are connected with the respective first leg 222a, 222b and second leg 226a, 226b the tubular frame 212a, 212b has an "O" profile. The reinforcement members are typically "L" shaped stampings and are formed of one or multiple pieces depending on the requirements of the particular door. If multiple pieces are used, they are connected together by welding, adhesives fasteners or other ways of joining the pieces. This reinforcement member could also include other cross-sectional shapes such as a tube or the like. The reinforcement member 232a, 232b is has a contoured portion 231a, 231b that contours to the respective inner panel 218a, 218b or outer panel 220a, 220b at a spoiler 234a, 234b area of the outer panel. This provides an even more robust structure if it is needed.

As shown in the Figures the doors are hinged toward meeting in the terminal end area for opening and closing.

## Claims

1. A vehicle door (210a, 210b) comprising:
a first vehicle door (210a) having a tubular frame (212a) for providing attachment of hinges (214a) and attachment surfaces (216a, 216c) for connecting latches to the frame (212a) and an inner panel (218a) and an outer panel (220a) attached to the tubular frame (212a), and
a second vehicle door (210b) for meeting the first vehicle door (210a), the second vehicle door (210b) includes a tubular frame (212b) for providing attachment of hinges (214b) and attachment surfaces (216b, 216d) for connecting latches to the frame (212b) and an inner panel ( 218b) and an outer panel ( 220b) attached to the tubular frame (212b), such that the tubular frame (212b) is positioned between the inner panel (218b) and the outer panel (220b) internally within the vehicle door (210b)
wherein the tubular frame (212a) of the first vehicle door (210a) and the tubular frame (212b) of the second vehicle door (210b) both include a first leg (222a, 222b), a second leg (226a, 226b) and a middle connection leg (224a, 224b) for forming a "C" shape,
wherein the first leg (222a) and the second leg (226a) of the tubular frame (212a) of the first vehicle door (210a) each have a terminal end (228a, 230a) and the first leg (222b) and the second leg (226b) of the tubular frame (212b) of the second vehicle door (210b) each have a terminal end (228b, 230b);
a first reinforcement member (232a) having an upper end (233a) and a lower end (235a) connected to the tubular frame (212a) of the first vehicle door (210a) between the terminal end (230a) of the first leg (222a) and the terminal end (228a) of the second leg (226a), and
a second reinforcement member (232b) having an upper end (233b) and a lower end (235b) connected to the tubular frame (212b) of the second vehicle door (210b) between the terminal end (230b) of the first leg (222b) and the terminal end (228b) of the second leg (226b);
**characterised in that** the upper end (233a, 233b) of the reinforcement (232a, 232b) and terminal end (228a, 228b) of second leg (226a, 226b) are each connected to a respective upper bracket (236a, 236b) that also includes one of the attachment surfaces (216a, 216b), and the lower end (235a, 235b) of the reinforcement (232a, 232b) and terminal end (230a, 230b) of first leg (222a, 222b) are each connected to a respective a lower bracket (238a, 238b) that also includes one of the attachment surfaces (216c, 216d).

2. The vehicle door (210a, 210b) of claim 1, wherein the tubular frame (212a, 212b) is positioned between the inner panel (218a, 218b) and the outer panel (220a, 220b) internally within the vehicle door (210a, 210b); and/or
further including a plurality of outer panels (221a, 221b, 221c, 221d); and/or
further including more than one inner panel (218a, 218b); and/or
wherein the inner panel (218a, 218b) is attached to the tubular frame (212a, 212b) and the outer panel (220a, 220b) is attached to the inner panel (218a, 218b).

3. The vehicle door (210a, 210b) of claim 1 or 2, wherein an upper outer panel (221c, 221d) and a lower outer panel (221a, 221b) being attached to an inner panel (218a, 218b), wherein the inner panel (218a, 218b) is connected to the tubular frame (212a, 212b); and/or
wherein the inner panel (218a, 218b) is attached to the tubular frame (212a, 212b) and the outer panel (220a, 220b) is attached to the inner panel (218a, 218b).

4. The vehicle door (210a, 210b) of claim 3,
wherein the reinforcement has a tubular or "L" shaped cross-section; and/or
wherein the reinforcement has a contoured portion to support at least a spoiler (234a, 234b) of the vehicle door (210a, 210b), the contoured portion preferably following a contour portion of the outer upper panel (221c, 221d).

5. The vehicle door (210a, 210b) of claim 1, wherein the first vehicle door (210a, 210b) and the second vehicle door (210a, 210b) are hinged toward meeting in the terminal end area for opening and closing.

6. The vehicle door (210a, 210b) of claim 1, further comprising:
wherein the first reinforcement member (232a) of the first door (210a) is contoured for matching and supporting an outer contoured surface of the outer panel (220a) of the first door (210a), and
wherein the second reinforcement member (232b) of the second door (210b) is contoured for matching and supporting an outer contoured surface of the outer panel (220b) of the second door (210b).

7. The vehicle door (210a, 210b) of claim 6, wherein the outer contoured surface of the outer panel (220a) of the first door (210a) and the outer contoured surface of the outer panel (220b) of the second door (210b) is a spoiler (234a, 234b).

8. The vehicle door (210a, 210b) of any one of claims 1 to 7, wherein the tubular frame (212a) of the first vehicle door (210a) and the tubular frame (112b; 212b) of the second vehicle door (210b) are made from a tubular metal material and the reinforcement member (232a) of the first vehicle door (210a) and the reinforcement member (232b) of the second vehicle door (210b) are made from a stamped material.

9. The vehicle door (210a, 210b) of any one of claims 1 to 8, wherein the first reinforcement member (232a) and the second reinforcement member (232b) is a one-piece stamping.

10. The vehicle door (210a, 210b) of any one of claims 1 to 9, wherein the first reinforcement member (232a) and the second reinforcement member (232b) are made from more than one piece of material which are connected together by welding, adhesives, fasteners and combinations thereof.

## Patentansprüche

1. Fahrzeugtür (210a, 210b), die Folgendes umfasst:
eine erste Fahrzeugtür (210a) mit einem röhrenförmigen Rahmen (212a) zum Bereitstellen der Befestigung von Scharnieren (214a) und Befestigungsflächen (216a, 216c) zum Verbinden von Verriegelungen mit dem Rahmen (212a) und einer Innenplatte (218a) und einer Außenplatte (220a), die an dem röhrenförmigen Rahmen (212a) befestigt sind, und
eine zweite Fahrzeugtür (210b) zum Treffen mit der ersten Fahrzeugtür (210a), wobei die zweite Fahrzeugtür (210b) einen rohrförmigen Rahmen (212b) zum Bereitstellen der Befestigung von Scharnieren (214b) und Befestigungsflächen (216b, 216d) zum Verbinden von Verriegelungen mit dem Rahmen (212b) und eine innere Platte ( 218b) und eine äußere Platte ( 220b), die an dem rohrförmigen Rahmen (212b) befestigt sind, so dass der rohrförmige Rahmen (212b) zwischen der inneren Platte (218b) und der äußeren Platte (220b) innerhalb der Fahrzeugtür (210b) angeordnet ist.
wobei der rohrförmige Rahmen (212a) der ersten Fahrzeugtür (210a) und der rohrförmige Rahmen (212b) der zweiten Fahrzeugtür (210b) beide einen ersten Schenkel (222a, 222b), einen zweiten Schenkel (226a, 226b) und einen mittleren Verbindungsschenkel (224a, 224b) zur Bildung einer "C"-Form aufweisen,
wobei der erste Schenkel (222a) und der zweite Schenkel (226a) des rohrförmigen Rahmens (212a) der ersten Fahrzeugtür (210a) jeweils ein Abschlussende (228a, 230a) und der erste Schenkel (222b) und der zweite Schenkel (226b) des rohrförmigen Rahmens (212b) der zweiten Fahrzeugtür (210b) jeweils ein Abschlussende (228b, 230b) aufweisen,
ein erstes Verstärkungselement (232a) mit einem oberen Ende (233a) und einem unteren Ende (235a), das mit dem rohrförmigen Rahmen (212a) der ersten Fahrzeugtür (210a) zwischen dem Anschlussende (230a) des ersten Schenkels (222a) und dem Anschlussende (228a) des zweiten Schenkels (226a) verbunden ist, und
ein zweites Verstärkungselement (232b) mit einem oberen Ende (233b) und einem unteren Ende (235b), das mit dem rohrförmigen Rahmen (212b) der zweiten Fahrzeugtür (210b) zwischen dem Anschlussende (230b) des ersten Schenkels (222b) und dem Anschlussende (228b) des zweiten Schenkels (226b) verbunden ist, **dadurch gekennzeichnet, dass**
das obere Ende (233a, 233b) der Verstärkung (232a, 232b) und das Abschlussende (228a, 228b) des zweiten Schenkels (226a, 226b) jeweils mit einer entsprechenden oberen Halterung (236a, 236b) verbunden sind, die ebenfalls eine der Befestigungsflächen (216a, 216b) aufweist, und das untere Ende (235a, 235b) der Verstärkung (232a, 232b) und das Abschlussende (230a, 230b) des ersten Schenkels (222a, 222b) jeweils mit einer entsprechenden unteren Halterung (238a, 238b) verbunden sind, die ebenfalls eine der Befestigungsflächen (216c, 216d) aufweist.

2. Fahrzeugtür (210a, 210b) nach Anspruch 1, wobei der rohrförmige Rahmen (212a, 212b) zwischen der inneren Platte (218a, 218b) und der äußeren Platte (220a, 220b) im Inneren der Fahrzeugtür (210a, 210b) angeordnet ist, und/oder
ferner eine Anzahl von Außenplatten (221a, 221b, 221c, 221d) enthält,
und/oder
ferner mehr als eine Innenplatte (218a, 218b) enthält, und/oder
wobei die innere Platte (218a, 218b) an dem rohrförmigen Rahmen (212a, 212b) befestigt ist und die äußere Platte (220a, 220b) an der inneren Platte (218a, 218b) befestigt ist.

3. Fahrzeugtür (210a, 210b) nach Anspruch 1 oder 2, wobei ein oberes Außenpaneel (221c, 221d) und ein unteres Außenpaneel (221a, 221b) an einem Innenpaneel (218a, 218b) befestigt sind, wobei das Innenpaneel (218a, 218b) mit dem rohrförmigen Rahmen (212a, 212b) verbunden ist und/oder
wobei die innere Platte (218a, 218b) an dem rohrförmigen Rahmen (212a, 212b) befestigt ist und die äußere Platte (220a, 220b) an der inneren Platte (218a, 218b) befestigt ist.

4. Fahrzeugtür (210a, 210b) nach Anspruch 3,
wobei die Verstärkung einen röhrenförmigen oder "L"-förmigen Querschnitt aufweist und/oder
wobei die Verstärkung einen konturierten Abschnitt aufweist, um mindestens einen Spoiler (234a, 234b) der Fahrzeugtür (210a, 210b) zu stützen, wobei der konturierte Abschnitt vorzugsweise einem Konturabschnitt der äußeren oberen Platte (221c, 221d) folgt.

5. Fahrzeugtür (210a, 210b) nach Anspruch 1, wobei die erste Fahrzeugtür (210a, 210b) und die zweite Fahrzeugtür (210a, 210b) zum Öffnen und Schließen im Endbereich gelenkig miteinander verbunden sind.

6. Fahrzeugtür (210a, 210b) nach Anspruch 1, ferner umfassend:
wobei das erste Verstärkungselement (232a) der ersten Tür (210a) so konturiert ist, dass es an eine äußere konturierte Fläche der Außenplatte (220a) der ersten Tür (210a) angepasst ist und diese stützt, und
wobei das zweite Verstärkungselement (232b) der zweiten Tür (210b) so konturiert ist, dass es an eine äußere konturierte Fläche der Außenplatte (220b) der zweiten Tür (210b) angepasst ist und diese stützt.

7. Fahrzeugtür (210a, 210b) nach Anspruch 6, wobei die äußere konturierte Oberfläche der Außenplatte (220a) der ersten Tür (210a) und die äußere konturierte Oberfläche der Außenplatte (220b) der zweiten Tür (210b) ein Spoiler (234a, 234b) ist.

8. Fahrzeugtür (210a, 210b) nach einem der Ansprüche 1 bis 7, wobei der rohrförmige Rahmen (212a) der ersten Fahrzeugtür (210a) und der rohrförmige Rahmen (112b, 212b) der zweiten Fahrzeugtür (210b) aus einem rohrförmigen Metallmaterial hergestellt sind und das Verstärkungselement (232a) der ersten Fahrzeugtür (210a) und das Verstärkungselement (232b) der zweiten Fahrzeugtür (210b) aus einem gestanzten Material hergestellt sind.

9. Fahrzeugtür (210a, 210b) nach einem der Ansprüche 1 bis 8, wobei das erste Verstärkungselement (232a) und das zweite Verstärkungselement (232b) ein einteiliges Stanzteil ist-.

10. Fahrzeugtür (210a, 210b) nach einem der Ansprüche 1 bis 9, wobei das erste Verstärkungselement (232a) und das zweite Verstärkungselement (232b) aus mehr als einem Stück Material hergestellt sind, die durch Schweißen, Kleben, Befestigungen und Kombinationen davon miteinander verbunden sind.

## Revendications

1. Porte de véhicule (210a, 210b) comprenant :
une première porte de véhicule (210a) ayant un châssis tubulaire (212a) pour fournir une fixation de charnières (214a) et des surfaces de fixation (216a, 216c) pour connecter des serrures au châssis (212a) et un panneau intérieur (218a) et un panneau extérieur (220a) attachés au châssis tubulaire (212a), et
une seconde porte de véhicule (210b) pour rencontrer la première porte de véhicule (210a), la seconde porte de véhicule (210b) incluant un châssis tubulaire (212b) pour fournir une fixation de charnières (214b) et des surfaces de fixation (216b, 216d) pour connecter des serrures au châssis tubulaire (212b) et un panneau intérieur (218b) et un panneau extérieur (220b) fixés au châssis tubulaire (212b), de telle sorte que le châssis tubulaire (212b) est positionné entre le panneau intérieur (218b) et le panneau extérieur (220b) de manière interne à l'intérieur de la porte de véhicule (210b),
dans laquelle le châssis tubulaire (212a) de la première porte de véhicule (210a) et le châssis tubulaire (212b) de la seconde porte de véhicule (210b) incluent tous deux une première jambe (222a, 222b), une seconde jambe (226a, 226b) et une jambe de connexion médiane (224a, 224b) pour réaliser une forme en « C »,
dans laquelle la première jambe (222a) et la seconde jambe (226a) du châssis tubulaire (212a) de la première porte de véhicule (210a) ont chacune une extrémité terminale (228a, 230a) et la première jambe (222b) et la seconde jambe (226b) du châssis tubulaire (212b) de la seconde porte de véhicule (210b) ont chacune une extrémité terminale (228b, 230b) ;
un premier élément de renforcement (232a) ayant une extrémité supérieure (233a) et une extrémité inférieure (235a) connectées au châssis tubulaire (212a) de la première porte de véhicule (210a) entre l'extrémité terminale (230a) de la première jambe (222a) et l'extrémité terminale (228a) de la seconde chambre (226a), et
un second élément de renforcement (232b) ayant une extrémité supérieure (233b) et une extrémité inférieure (235b) connectées au châssis tubulaire (212b) de la seconde porte de véhicule (210b) entre l'extrémité terminale (230b) de la première jambe (222b) et l'extrémité terminale (228b) de la seconde jambe (226b) ;
**caractérisée en ce que**
l'extrémité supérieure (233a, 233b) du renforcement (232a, 232b) et l'extrémité terminale (228a, 228b) de la seconde jambe (226a, 226b) sont chacune connectées à une monture supérieure respective (236a, 236b) qui inclut également l'une des surfaces de fixation (216a, 216b), et l'extrémité inférieure (235a, 235b) du renforcement (232a, 232b) et l'extrémité terminale (230a, 230b) de la première jambe (222a, 222b) sont chacune connectées à une monture inférieure respective (238a, 238b) qui inclut également l'une des surfaces de fixation (216c, 216d).

2. Porte de véhicule (210a, 210b) selon la revendication 1, dans laquelle le châssis tubulaire (212a, 212b) est positionné entre le panneau intérieur (218a, 218b) et le panneau extérieur (220a, 220b) de manière interne à l'intérieur de la porte de véhicule (210a, 210b) ; et/ou
inclut en outre une pluralité de panneaux extérieurs (221a, 221b, 221c, 221d) ; et/ou
inclut en outre plus d'un panneau intérieur (218a, 218b) ; et/ou
dans laquelle le panneau intérieur (218a, 218b) est fixé au châssis tubulaire (212a, 212b) et le panneau extérieur (220a, 220b) est fixé au panneau intérieur (218a, 218b).

3. Porte de véhicule (210a, 210b) selon la revendication 1 ou 2, dans laquelle un panneau extérieur supérieur (221c, 221d) et un panneau extérieur inférieur (221a, 221b) sont fixés à un panneau intérieur (218a, 218b), le panneau intérieur (218a, 218b) étant connecté au châssis tubulaire (212a, 212b) ; et/ou
dans laquelle le panneau intérieur (218a, 218b) est fixé au châssis tubulaire (212a, 212b) et le panneau extérieur (220a, 220b) est fixé au panneau intérieur (218a, 218b).

4. Porte de véhicule (210a, 210b) selon la revendication 3,
dans laquelle le renforcement a une section transversale tubulaire ou en forme de « L » ; et/ou
dans laquelle le renforcement a une portion profilée pour supporter au moins un becquet (234a, 234b) de la porte de véhicule (210a, 210b), la portion profilée suivant de préférence une portion profilée du panneau supérieur extérieur (221c, 221d).

5. Porte de véhicule (210a, 210b) selon la revendication 1, dans laquelle la première porte de véhicule (210a, 210b) et la seconde porte de véhicule (210a, 210b) sont articulées pour se rencontrer dans une zone d'extrémité terminale pour l'ouverture et la fermeture.

6. Porte de véhicule (210a, 210b) selon la revendication 1, comprenant en outre :
dans laquelle le premier élément de renforcement (232a) de la première porte (210a) est profilé pour correspondre à et supporter une surface profilée extérieure du panneau extérieur (220a) de la première porte (210a), et
dans laquelle le second élément de renforcement (232b) de la seconde porte (210b) est profilé pour correspondre à et supporter une surface profilée extérieure du panneau extérieur (220b) de la seconde porte (210b).

7. Porte de véhicule (210a, 210b) selon la revendication 6, dans laquelle la surface profilée extérieure du panneau extérieur (220a) de la première porte (210a) et la surface profilée extérieure du panneau extérieur (220b) de la seconde porte (210b) est un becquet (234a, 234b).

8. Porte de véhicule (210a, 210b) selon l'une quelconque des revendications 1 à 7, dans laquelle
le châssis tubulaire (212a) de la première porte de véhicule (210a) et le châssis tubulaire (112b ; 212b) de la seconde porte de véhicule (210b) sont faits à partir d'un matériau métallique tubulaire et l'élément de renforcement (232a) de la première porte de véhicule (210a) et l'élément de renforcement (232b) de la seconde porte véhicule (210b) sont faits à partir d'un matériau embouti.

9. Porte de véhicule (210a, 210b) selon l'une quelconque des revendications 1 à 8, dans laquelle
le premier élément de renforcement (232a) et le second élément de renforcement (232b) sont un emboutissage d'une seule pièce.

10. Porte de véhicule (210a, 210b) selon l'une quelconque des revendications 1 à 9, dans laquelle
le premier élément de renforcement (232a) et le second élément de renforcement (232b) sont faits à partir de plusieurs pièces de matériau qui sont connectées conjointement par soudage, adhésifs, attaches et des combinaisons de ceux-ci.
